Europäisches Patentamt

European Patent Office

Office européen des brevets

(11) Numéro de publication: **0 514 611 B1**

(12) **FASCICULE DE BREVET EUROPEEN**

(45) Date de publication de fascicule du brevet: **10.05.95**

(21) Numéro de dépôt: **91401345.3**

(22) Date de dépôt: **24.05.91**

(51) Int. Cl.⁶: **C03C 14/00**, C03C 10/08, C03C 10/12

(54) Procédé de fabrication d'un matériau composite céramique à matrice vitrocéramique entièrement céramisée.

(43) Date de publication de la demande:
**25.11.92 Bulletin 92/48**

(45) Mention de la délivrance du brevet:
**10.05.95 Bulletin 95/19**

(84) Etats contractants désignés:
**AT BE CH DE DK ES GB GR IT LI LU NL SE**

(56) Documents cités:
**EP-A- 0 322 295**
**EP-A- 0 327 783**
**FR-A- 2 655 327**

**JOURNAL OF MATERIALS SCIENCE LETTERS. vol. 6, no. 10, Octobre 1987, LONDON GB pages 1187 - 1189; H.VESTEGHEM ET AL.: 'Low-Temperature Cordierite Glass from Autoclave-Prepared Gel.'**

**CERAMIC ENGINEERING AND SCIENCE PROCEEDINGS. vol. 7, no. 7-8, Août 1986, WESTERVILLE,OHIO,US pages 969 - 977; V.J.POWERS ET AL.: 'SiC Fiber-Reinforced Glass-Ceramic Composites in the Zirconia/Magnesium Aluminosilicate System.'**

(73) Titulaire: **OFFICE NATIONAL D'ETUDES ET DE RECHERCHES AEROSPATIALES(O.N.E.R.A.)**
**29, avenue de la Division Leclerc**
**F-92322 Châtillon Cédex (FR)**

(72) Inventeur: **Larnac, Guy**
**Résidence Le Méridien K.**
**161 avenue Marius Carrieu**
**F-34080 Montpellier (FR)**
Inventeur: **Phalippou, Jean**
**203, Route de Mende**
**F-34980 Montferrier/Lez (FR)**
Inventeur: **Parlier, Michel**
**Résidence Chantaiseau,**
**46, rue Serpentine**
**F-78960 Voisins Le Bretonneux (FR)**
Inventeur: **Ritti, Marie-Hélène**
**10, avenue Ramolfo Garnier**
**F-91300 Massy (FR)**
Inventeur: **Jamet, Jean**
**39, avenue de la Belle Etoile**
**F-33270 Bouliac (FR)**

EP 0 514 611 B1

**EP 0 514 611 B1**

(74) Mandataire: **Netter, André et al**
**Cabinet NETTER,**
**40, rue Vignon**
**F-75009 Paris (FR)**

## Description

L'invention concerne les matériaux composites ayant pour matrices des compositions vitrocéramiques à base d'oxydes de silicium, d'aluminium et de lithium, ce dernier pouvant être remplacé en tout ou en partie par l'oxyde de magnésium.

Les compositions de ce genre sont traditionnellement obtenues par fusion d'oxydes et/ou de carbonates. Depuis quelque temps a été découverte une autre voie dite sol-gel, basée sur une réaction d'hydrolyse et de polycondensation en milieu dissous de composés précurseurs, parmi lesquels au moins les composés d'aluminium et de silicium sont des alcoolates, avec formation d'un sol, puis d'un gel, suivie d'un traitement thermique à température élevée.

Cette voie sol-gel présente plusieurs avantages par rapport à la voie traditionnelle : le produit est plus pur, plus homogène et d'une composition plus précise en raison de l'absence de perte par évaporation. La dépense d'énergie est réduite, la température utilisée étant moins élevée. La composition obtenue, éventuellement broyée pour éliminer les agglomérats, fournit une poudre de surface spécifique élevée et très réactive qui permet de réaliser plus facilement des pièces denses, c'est-à-dire de porosité faible ou nulle.

L'invention a pour but de fournir une telle composition vitrocéramique obtenue par la voie sol-gel, présentant un faible coefficient de dilatation thermique et pouvant par conséquent supporter sans dommage, lorsqu'elle est sous forme de pièce dense, des variations de températures importantes ou rapides (chocs thermiques).

Une telle composition convient particulièrement pour constituer la matrice de matériaux composites céramiques renforcés par des fibres.

La demande de brevet EP 0 327 783 décrit par exemple un procédé de fabrication d'un matériau composite comprenant des fibres noyées dans une matrice vitrocéramique obtenue par la méthode sol-gel.

L'invention vise un procédé de fabrication d'un matériau composite dont la matrice vitrocéramique, ayant pour composants principaux $SiO_2$, $Al_2O_3$ et $Li_2O$ et/ou $MgO$, est obtenue par la voie sol-gel à partir d'alcoolates de silicium et d'aluminium et de composés de lithium et/ou de magnésium, et est essentiellement sous forme de solutions solides céramiques constituées de phases telles que $\beta$ - spodumène, cordiérite et mullite.

On a découvert que lorsque la composition vitrocéramique est essentiellement sous forme de telles solutions solides, qui ont elles-mêmes un faible coefficient de dilatation, elle ne donne pas lieu par élévation de température à des transitions de phases, si ce n'est la conversion d'une phase vitreuse résiduelle éventuelle en solution solide, de sorte qu'elle présente dans son ensemble un faible coefficient de dilatation. Ce faible coefficient de dilatation, ainsi que d'autres propriétés de la composition, sont également favorables à la formation de matériaux composites à renforts fibreux ayant de bonnes caractéristiques thermo-mécaniques.

Le $\beta$-spodumène, la cordiérite et la mullite ont respectivement pour formules de base $Al_2O_3,Li_2O,4SiO_2$, $2MgO,2Al_2O_3$, $5SiO_2$ et $2SiO_2,3Al_2O_3$. Bien entendu, s'agissant de solutions solides, la composition de ces phases peut s'écarter de ces formules.

Outre les composants principaux indiqués ci-dessus, la matrice peut contenir au moins un composant choisi parmi $BaO$, $Nb_2O_5$ et $B_2O_3$, cette liste n'étant pas limitative. De tels additifs ont notamment pour effet de modifier certaines propriétés de la matrice et/ou du matériau composite dont elle fait partie, en fonction de l'application envisagée.

L'obtention de la structure précitée dépend de plusieurs facteurs, parmi lesquels bien entendu la formule chimique de la composition, qui doit être compatible avec la présence prépondérante et la stabilité d'au moins une solution solide. L'homme du métier pourra déterminer si une formule envisagée peut convenir à cet égard, à l'aide du diagramme de phase du système concerné.

Les inventeurs ont constaté que tel est le cas en particulier pour une composition comprenant, pour une mole de $Al_2O_3$, ax-b mole de $Li_2O$, c moles de $SiO_2$, b mole de $BaO$ et a(l-x) mole de $MgO$, a, b, c et x pouvant varier respectivement de 0,4 à 1, de 0 à 0,1, de 3 à 8 et de 0 à 1.

Cette structure suppose également un processus d'élaboration évitant le maintien d'une phase amorphe vitreuse, évitant également l'apparition de phases cristallines nuisibles telles que la cristobalite et permettant par ailleurs la transformation complète de l'eucryptite par traitement thermique.

A cet effet, l'invention propose un procédé de fabrication selon la revendication 1.

Les précurseurs utilisés sont de préférence l'orthosilicate de tétraéthyle, le sec-butylate d'aluminium, les nitrates de lithium et/ou de magnésium, et le cas échéant le nitrate de baryum et le chlorure de niobium.

3

EP 0 514 611 B1

La phase de déshydratation et d'oxydation fournit, après broyage, une poudre à grande surface spécifique particulièrement réactive pouvant être densifiée facilement et efficacement.

Cette densification est obtenue en soumettant la composition sous forme de poudre à un pressage lors du traitement de céramisation.

D'autres caractéristiques de l'invention sont énoncées dans les revendications dépendantes.

Par ailleurs, l'invention sera illustrée plus en détail par les quelques exemples de réalisation décrits ci-après, l'exemple 3 étant un exemple partiel qui comporte seulement les étapes a) à f) du procédé.

On décrira tout d'abord le mode opératoire de préparation du gel. Seules la liste des composés précurseurs et leurs quantités varient d'un exemple à l'autre en fonction de la formule de la composition à réaliser.

Ces précurseurs sont :
- l'orthosilicate de tétraéthyle $Si(OC_2H_5)_4$ (TEOS)
- le sec-butylate d'aluminium $Al(OCH(CH_3)C_2H_5)_3$ (ASB)
- le nitrate de lithium $LiNO_3$

et le cas échéant
- le nitrate de magnésium $Mg(NO_3)_2$ $6H_2O$, contenant 42,2% en poids d'eau
- le nitrate de baryum $Ba(NO_3)_2$
- le chlorure de niobium $NbCl_5$.

Le solvant choisi, commun aux précurseurs et à l'eau d'hydrolyse, est l'isopropanol.

On ajoute de l'acide nitrique, sous forme d'une solution aqueuse à 70% en poids, qui a pour effet d'éviter la précipitation de AlOOH au cours de l'hydrolyse et qui favorise l'obtention d'un gel microporeux présentant une réactivité élevée lors du frittage.

L'alcool isopropylique est utilisé à raison de 10 moles pour 1 mole de TEOS, et l'acide nitrique de 0,2 mole pour une mole de TEOS.

La quantité d'eau de préhydrolyse, y compris celle apportée par l'isopropanol et par l'acide nitrique, représente 1 mode par mole de TEOS. La quantité complémentaire d'eau d'hydrolyse, y compris celle apportée par l'isopropanol et le cas échéant par le nitrate de magnésium, représente 3 moles par mole d'ASB plus 4 moles par mode de TEOS.

Dans un réacteur tricol muni d'une calotte chauffante, d'un agitateur et d'une colonne à distiller, on introduit, sous agitation, le TEOS, la moitié du solvant, l'eau de préhydrolyse et l'acide nitrique. Le mélange est porté à reflux (82°C) pendant 30 minutes.

Cette phase de préhydrolyse a pour but d'éviter l'hydrolyse préférentielle de l'ASB, avec précipitation de AlOOH, qui se produirait si on mettait simultanément en présence le TEOS, l'ASB et l'eau en raison de la faible réactivité du TEOS. Au cours de cette phase le TEOS est partiellement hydrolysé selon la réaction :

$$Si(OR)_4 + H_2O \rightarrow Si(OR)_3OH + ROH$$

et le produit d'hydrolyse partielle réagira avec les autres précurseurs lors de la phase suivante.

A l'issue des 30 minutes précitées, la température du réacteur est abaissée de 10°C pour interrompre le reflux. On ajoute alors par petites quantités (en quatre ou cinq fois) l'ASB fluidifié par dilution dans un peu de l'isopropanol. Le reflux est ensuite repris pendant 45 minutes. On arrête alors le chauffage et on introduit, toujours sous agitation, le nitrate de lithium et le cas échéant le nitrate de magnésium, dissous dans le reste de l'isopropanol.

Lorsque le mélange atteint la température ambiante, on ajoute l'eau d'hydrolyse, dans laquelle est dissous le cas échéant le nitrate de baryum, et on agite encore 5 à 10 minutes pour obtenir un sol homogène, qu'on introduit dans des récipients fermés. Un gel se forme en quelques heures à 45°C ou une nuit à température ambiante. Après gélification, les récipients sont ouverts et maintenus 24 à 48 heures dans une étuve à 90°C pour évaporer le solvant. Le gel est ensuite éventuellement broyé pour éliminer les agglomérats et traité dans un four à circulation d'air pour l'étape d'oxydation conduisant à la composition sous forme de poudre.

Le cycle thermique suivant convient particulièrement pour cette étape : chauffage à 3°C/mn de la température ambiante à 250°C et à 10°C/mn de 250 à 500°C, avec des paliers de 4 heures tous les 50°C de 250 à 500°C, puis refroidissement à une vitesse de 20°C/mn jusqu'à la température ambiante. Toutefois, ce cycle peut être simplifié par la suppression de certains paliers. On obtient ainsi une poudre amorphe très réactive ayant une surface spécifique de 300 $m^2/g$ environ. Cette poudre est avantageusement redispersée dans un broyeur à billes de zircone pour briser les amas de grains individuels et tamisée pour ne retenir que les grains de diamètre inférieur à 50 $\mu m$.

4

EP 0 514 611 B1

Exemple 1 : Composition $Li_2O$-$Al_2O_3$-$SiO_2$ + fibres courtes.

Le gel est préparé puis déshydraté et oxydé et la composition résultante broyée et tamisée comme il vient d'être décrit, en utilisant des quantités de précurseurs correspondant à la formule finale 0,45 $Li_2O$ - $Al_2O_3$ - $SiO_2$.

On prépare à partir de la poudre obtenue 3 matériaux composites comprenant respectivement 5%, 10% et 20% en volume de trichites de carbure de silicium commercialisées par SUMITOMO CORPORATION.

La poudre est dispersée sous ultrasons dans un bain d'alcool isopropylique contenant 5% en volume d'acide nitrique pour stabiliser la suspension. On agite fortement cette dernière et on y ajoute les fibres également dispersées sous ultrasons dans l'alcool isopropylique. Le mélange obtenu est encore agité 15 mn sous ultrasons, puis filtré sur un filtre en microfibres de verre capable de retenir les particules de diamètre supérieur à 0,5 $\mu$m.

On effectue le traitement de densification et de céramisation dans les conditions ci-après : élévation de la température de 20°C/mn jusqu'à 450°C sous vide, suivie d'un palier de 45 mn à cette température ; poursuite de l'échauffement à 10°C/mn jusqu'à 1000°C sous azote, avec pressage sous 16 MPa, et palier de 20 mn à 780°C ; poursuite de la montée à 20°C/mn jusqu'à 1300°C sous azote et pressage à 16 MPa.

Le tableau ci-après donne les propriétés des matériaux composites obtenus en fonction du taux volumique des fibres Vf.

La contrainte de rupture $\sigma$, le module élastique E et le $K_1C$ tiré des formules polynomiales de PARIS, sont déterminés par l'essai de flexion trois points, dans les conditions suivantes :

Pour $\sigma$ et E, la force est appliquée perpendiculairement à la direction du pressage de la poudre. La longueur entre appuis est de 16 mm et le rapport longueur/épaisseur est égal à 15. Pour le $K_1C$, la force est appliquée perpendiculairement à la direction du pressage. La longueur entre appuis est de 15 mm, la profondeur d'entaille de 0,9 mm et sa largeur de 70 $\mu$m. Le rapport hauteur/profondeur d'entaille est de 4, le rapport longueur entre appuis/hauteur est égal à 4,17. La vitesse de descente est de 0,2 mm/mn.

| Vf % | Porosité fermée % | Porosité ouverte % | $\sigma$ MPa | E GPa | $K_1C$ MPa.m$^{1/2}$ |
|---|---|---|---|---|---|
| 5 | 9,8 | 4,6 | 99 | 70 | 1,55 |
| 10 | 1,4 | 4,1 | 164 | 105 | 2,05 |
| 20 | 1,9 | 1,23 | 278 | 135 | 2,94 |

Le coefficient de dilatation pour Vf = 20% est de 2,84.10$^{-6}$°C$^{-1}$ entre 20 et 1000°C.

Exemple 2 : Composition $Li_2O$-$Al_2O_3$-$SiO_2$-BaO + fibres courtes.

On prépare la poudre comme dans l'exemple 1, en diminuant la quantité de nitrate de lithium et en ajoutant du nitrate de baryum de façon que la formule de la composition vitrocéramique soit 0,05 BaO - 0,4 $Li_2O$ - $Al_2O_3$ - 3 $SiO_2$. L'introduction de BaO a pour but de stabiliser la composition au-delà de 1000°C, en inhibant la formation de cristobalite, phase cristalline qui donne lieu à une transition de phase à 300°C environ pouvant entrainer une fissuration.

Le mélange poudre-trichites est préparé comme dans l'exemple précédent, avec un taux volumique de 20%. Le traitement de densification et de céramisation comporte une fusion de la composition vitrocéramique : échauffement de 10°C/mn, sous vide, jusqu'à 980°C avec paliers de 30 mn à 480°C et de 15 mn à 780 et 980°C ; poursuite de l'échauffement à 10°C/mn sous azote, avec pressage à 16 MPa, jusqu'à 1325°C avec palier de 5 mn à cette température ; refroidissement à 30°C/mn sous azote jusqu'à la température ambiante, sans pressage.

Le matériau composite obtenu possède une densité relative (densité apparente/densité du composé totalement dense) de 0,99, ce qui indique une excellente densification. L'analyse par rayons X montre la présence prépondérante de $\beta$-spodumène et de mullite, et une petite quantité de phase amorphe. A ce stade le matériau présente les propriétés suivantes :

$\sigma$ = 317 MPa
E = 136 GPa
$K_1C$ = 3,07 MPa.m$^{\frac{1}{2}}$

$$\alpha \, {}^{1000}_{\phantom{0}20} = 4{,}61.10^{-6}{}^\circ C^{-1}.$$

Un traitement thermique ultérieur à 1280°C à l'air permet de résorber la phase vitreuse et fait apparaître une nouvelle phase identifiée comme étant un alumino-silicate de baryum (défini dans la norme ASTM 12-926 sous le nom d'hexacelsian). Le matériau composite ainsi traité présente un coefficient de dilatation entre 20 et 1000°C de $3{,}2.10^{-6}$°$C^{-1}$, une densité de 2,71 et des propriétés mécaniques remarquables :

$\sigma$ = 412 MPa

E = 130 GPa

$K_1C$ = 2,98 MPa/m$\frac{1}{2}$.

Exemple 3: Composition $MgO$-$Li_2O$-$Al_2O_3$-$SiO_2$ + fibres longues.

On prépare une poudre ayant la formule suivante :

0,5 $MgO$ - O,5 $Li_2O$ - $Al_2O_3$ - 4 $SiO_2$.

Les fibres utilisées sont des fibres longues de carbure de silicium produites par NIPPON CARBON sous la référence NLM 202 et commercialisées par BROCHIER sous forme d'un tissu bidirectionnel, sous la référence E2140. On élimine l'ensimage des fibres, à base de résine acrylique, par immersion du tissu dans un mélange équivolumique d'acétone et d'alcool isopropylique qu'on agite pendant 15 mn chaque demi-heure au moyen d'une cuve à ultrasons. Le tissu est ainsi traité dans deux bains successifs à raison de deux heures dans chaque bain.

70 g de poudre déshydratée et oxydée à 500°C et désagglomérée sur tamis de 50 $\mu$m sont mélangés à une solution visqueuse de 5 g de polyméthacrylate de méthyle dans 100 cm$^3$ de chlorobenzène. La barbotine obtenue est appliquée au pinceau pour imprégner le tissu de fibres, après quoi le solvant s'évapore immédiatement, le polymère assurant l'adhésion de la poudre aux fibres. On effectue plusieurs applications suivies de pesées jusqu'à obtenir une quantité de poudre comprise entre 80 et 90 mg par cm$^2$ de tissu. Dans la bande de tissu ainsi imprégnée, on découpe cinq nappes de 70 x 70 mm, qu'on empile dans un moule en graphite ayant la même section pour réaliser le traitement thermique de densification et de céramisation : élévation de température de 20°C/mn jusqu'à 960-980°C sous vide avec un premier palier de 15 mn à 350°C pour éliminer le polyméthacrylate de méthyle, suivi d'un deuxième palier de 45 mn à 450°C favorisant le réarrangement, poursuite de l'échauffement à 20°C/mn sous azote jusqu'à 1310°C et palier de 5 mn à cette température, avec pressage sous 11 MPa ; refroidissement non contrôlé sous azote et sans pressage.

Le matériau composite obtenu a un taux volumique de fibres de 36% et une densité apparente de 2,49 (densité relative apparente 0,99). L'analyse aux rayons X montre la présence prépondérante de $\beta$-spodumène et de cordiérite, avec un peu de phase amorphe.

La résistance à la rupture, déterminée à l'essai de flexion trois points sur une éprouvette de largeur 10 mm et d'épaisseur 2,38 mm avec distance entre appuis de 50 mm, est 290 ± 35 MPa.

Les exemples ci-dessus n'ont aucun caractère limitatif. Il est possible en particulier de combiner différemment ou de modifier les caractéristiques décrites, notamment en ce qui concerne la formule de la composition vitrocéramique, le mode opératoire de préparation du gel, les traitements thermiques de déshydratation et d'oxydation, et de céramisation, la nature chimique et la structure physique des fibres. Plus particulièrement l'utilisation de fibres de carbure de silicium d'autres provenances que celles mises en oeuvre dans les exemples, présentant des propriétés de surface différentes, est envisagée.

**Revendications**

1. Procédé de fabrication d'un matériau composite céramique comprenant des fibres noyées dans une matrice vitrocéramique ayant pour composants principaux $SiO_2$, $Al_2O_3$ et au moins un oxyde choisi dans le groupe constitué par $Li_2O$ et $MgO$, et pouvant contenir $BaO$ en tant que composant optionnel, laquelle matrice est obtenue par la voie sol-gel à partir d'un alcoolate de silicium, d'un alcoolate d'aluminium et d'au moins un composé minéral choisi parmi les composés minéraux du lithium, du magnésium et du baryum, lesdits alcoolate de silicium, alcoolate d'aluminium et composé minéral servant respectivement de précurseurs desdits constituants principaux, le procédé comprenant les étapes consistant à :

a) préparer un gel par hydrolyse et polycondensation desdits précurseurs en solution dans un solvant;

b) éliminer le solvant à partir du gel ainsi obtenu;

c) broyer éventuellement ledit gel;

d) déshydrater et oxyder ledit gel par échauffement à l'air pendant plusieurs heures, pour obtenir une composition sous forme de poudre;

e) mettre ladite composition sous forme de poudre en contact avec lesdites fibres; et

f) densifier et céramiser le produit de l'étape e) par échauffement à une température au plus légèrement supérieure à la température de fusion de ladite composition,

caractérisé en ce que :

- l'étape a) est réalisée par préhydrolyse de l'alcoolate de silicium par une fraction de l'eau d'hydrolyse totale et réaction du produit d'hydrolyse ainsi obtenu avec les autres précurseurs et le complément de l'eau d'hydrolyse totale;
- l'échauffement de l'étape d) a lieu progressivement jusqu'à une température d'environ 500°C;
- l'échauffement de l'étape f) a lieu sous vide à une première température, puis sous pression à une seconde température supérieure à la première température;

et en ce que, lorsqu'une phase vitreuse subsiste à l'issue de l'étape f), celle-ci est suivie d'une étape g) consistant en un traitement thermique à une température légèrement inférieure à la température de fusion de ladite composition, de façon à transformer cette phase vitreuse résiduelle en solution solide céramique, pour obtenir une matrice vitrocéramique entièrement céramisée.

2. Procédé selon la revendication 1, caractérisé en ce que l'alcoolate de silicium est l'orthosilicate de tétraéthyle (TEOS) et que l'alcoolate d'aluminium est le sec-butylate d'aluminium (ASB).

3. Procédé selon l'une des revendications précédentes, caractérisé en ce que le précurseur de $Li_2O$, MgO ou BaO est respectivement le nitrate de lithium, le nitrate de magnésium ou le nitrate de baryum.

4. Procédé selon l'une des revendications précédentes, caractérisé en ce que le solvant est l'alcool isopropylique.

5. Procédé selon l'une des revendications précédentes, caractérisé en ce que les fibres sont à base de carbure de silicium.

6. Procédé selon la revendication 5, caractérisé en ce que les fibres comportent une quantité appréciable d'oxygène et de carbone en surface et ladite composition sous forme de poudre comprend au moins un composant choisi parmi MgO et $Nb_2O_5$, destiné à limiter son adhérence aux fibres.

7. Procédé selon l'une des revendications précédentes, caractérisé en ce que l'étape e) est réalisée par imprégnation d'un tissu de fibres longues au moyen d'une suspension de ladite composition sous forme de poudre dans un liquide visqueux, et en ce que l'étape f) est réalisée sur un empilement de plusieurs nappes de tissu ainsi imprégnées.

8. Procédé selon l'une des revendications précédentes, caractérisé en ce que ladite matrice vitrocéramique est essentiellement constituée de $SiO_2$, $Al_2O_3$, MgO et $Li_2O$.

9. Procédé selon l'une des revendications précédentes, caractérisé en ce que la matrice répond sensiblement à l'une des formules suivantes :

$0,05$ BaO - $0,4$ $Li_2O$ - $Al_2O_3$ - $3$ $SiO_2$
$0,5$ MgO - $0,5$ $Li_2O$ - $Al_2O_3$ - $4$ $SiO_2$.

## Claims

1. Process for manufacturing a composite ceramic material comprising fibres imbedded in a vitroceramic matrix having as its principle components $SiO_2$, $Al_2O_3$ and at least one oxide selected from the group consisting of $Li_2O$ and MgO, and which may contain BaO as an optional component, which matrix is obtained by the sol-gel route from a silicon alcoholate, an aluminium alcoholate and at least one inorganic compound selected from inorganic compounds of lithium, magnesium and barium, the said silicon alcoholate, aluminium alcoholate and inorganic compound acting respectively as precursors of the said principal constituents, the process comprising stages consisting of :

a) preparing a gel by hydrolysis and polycondensation of the said precursors in solution in a solvent;

b) removing the solvent from the gel thus obtained;

c) possibly grinding the said gel;

d) dehydrating and oxidizing the said gel by heating in air for several hours, in order to obtain a composition in the form of a powder;

e) putting the said composition in the form of a powder in contact with the said fibres; and

f) densifying and ceramizing the product from stage e) by heating at a temperature at most slightly greater than the melting point of the said composition,

characterized in that :

- stage a) is carried out by prehydrolysing the silicon alcoholate with a fraction of the total hydrolysis water and reacting the hydrolysis product thus obtained with the other precursors and the remainder of the total hydrolysis water;

- heating in stage d) takes place progressively up to a temperature of about 500 °C;

- heating in stage f) takes place under vacuum at an initial temperature and then under pressure at a second temperature greater than the initial temperature;

and in that, when a vitreous phase exists at the end of stage f), the latter is followed by a stage g) consisting of heat treatment at a temperature slightly less than the melting point of the said composition, so as to convert this residual vitreous phase into a ceramic solid solution, in order to obtain an entirely ceramized vitroceramic matrix.

2. Process according to claim 1, characterized in that the silicon alcoholate is tetraethyl orthosilicate (TEOS) and that the aluminium alcoholate is aluminium sec-butylate (ASB).

3. Process according to one of the preceding claims, characterized in that the precursor of $Li_2O$, $MgO$ or $BaO$ is lithium nitrate, magnesium nitrate or barium nitrate respectively.

4. Process according to one of the preceding claims, characterized in that the solvent is isopropyl alcohol.

5. Process according to one of the preceding claims, characterized in that the fibres are based on silicon carbide.

6. Process according to claim 5, characterized in that the fibres have an appreciable quantity of oxygen and carbon on the surface and the said composition in powder form contains at least one component selected from $MgO$ and $Nb_2O_5$, intended to limit its adhesion to the fibres.

7. Process according to one of the preceding claims, characterized in that stage e) is carried out by impregnating a fabric made of long fibres by means of a suspension of the said composition in powder form in a viscous liquid, and in that stage f) is carried out on a stack of several sheets of fabric thus impregnated.

8. Process according to one of the preceding claims, characterized in that the said vitroceramic matrix consists essentially of $SiO_2$, $Al_2O_3$, $MgO$ and $Li_2O$.

9. Process according to one of the preceding claims, characterized in that the matrix essentially corresponds to one of the following formulae :

$0.05\ BaO - 0.4\ Li_2O - Al_2O_3 - 3\ SiO_2$
$0.5\ MgO - 0.5\ Li_2O - Al_2O_3 - 4\ SiO_2$.

**Patentansprüche**

1. Verfahren zur Herstellung eines keramischen Verbundwerkstoffs, umfassend Fasern, die in eine glaskeramische Matrix eingebettet sind, welche als Hauptbestandteile $SiO_2$, $Al_2O_3$ und mindestens ein Oxid, ausgewählt aus der Gruppe bestehend aus $Li_2O$ und $MgO$, hat und $BaO$ als fakultativen Bestandteil enthalten kann, wobei diese Matrix durch die Sol-Gel-Methode ausgehend von einem Siliciumalkoholat, einem Aluminiumalkoholat und mindestens einer anorganischen Verbindung, ausgewählt aus anorganischen Verbindungen von Lithium, von Magnesium und von Barium, erhalten wird, wobei das Siliciumalkoholat, Aluminiumalkoholat und die anorganische Verbindung jeweils als Vorläufer der Hauptbestandteile dienen, wobei das Verfahren die Schritte umfaßt:

a) Herstellen eines Gels durch Hydrolyse und Polykondensation der Vorläufer in Lösung in einem Lösungsmittel;

b) Entfernen des Lösungsmittels aus dem so erhaltenen Gel;

c) gegebenenfalls Vermahlen des Gels;

d) Dehydratisieren und Oxidieren des Gels durch Erhitzen an der Luft während mehrerer Stunden, um eine Zusammensetzung in Form eines Pulvers zu erhalten;

e) Zusammenbringen der Zusammensetzung in Form eines Pulvers mit den Fasern; und

f) Verdichten und Keramisieren des Produkts von Schritt e) durch Erhitzen auf eine Temperatur, die höchstens geringfügig höher ist als die Schmelztemperatur der Zusammensetzung,

**dadurch gekennzeichnet**, daß:

- der Schritt a) durch Vorhydrolyse des Siliciumalkoholats durch einen Bruchteil des Wassers für die vollständige Hydrolyse und Reaktion des so erhaltenen Hydrolyseprodukts mit den anderen Vorläufern und dem Rest des Wassers für die vollständige Hydrolyse durchgeführt wird;
- das Erhitzen des Schritts d) schrittweise bis zu einer Temperatur von ungefähr 500 °C erfolgt; und
- das Erhitzen des Schritts f) im Vakuum bei einer ersten Temperatur, anschließend unter Druck bei einer zweiten Temperatur, die höher als die erste Temperatur ist, erfolgt; und

daß, wenn eine glasartige Phase am Ende des Schritts f) vorhanden ist, auf diesen ein Schritt g) erfolgt, der aus einer Wärmebehandlung bei einer Temperatur, die geringfügig unterhalb der Schmelztemperatur der Zusammensetzung liegt, besteht, so daß diese verbliebene glasartige Phase in eine feste keramische Lösung umgewandelt wird, um eine vollständig keramisierte glaskeramische Matrix zu erhalten.

2. Verfahren nach Anspruch 1, **dadurch gekennzeichnet**, daß das Siliciumalkoholat Tetraethylorthosilicat (TEOS) ist und daß das Aluminiumalkoholat Aluminium-sec-butylat (ASB) ist.

3. Verfahren nach einem der vorhergehenden Ansprüche, **dadurch gekennzeichnet**, daß der Vorläufer von $Li_2O$, MgO oder BaO Lithiumnitrat, Magnesiumnitrat bzw. Bariumnitrat ist.

4. Verfahren nach einem der vorhergehenden Ansprüche, **dadurch gekennzeichnet**, daß das Lösungsmittel Isopropylalkohol ist.

5. Verfahren nach einem der vorhergehenden Ansprüche, **dadurch gekennzeichnet**, daß es sich bei den Fasern um Fasern auf Siliciumcarbid-Basis handelt.

6. Verfahren nach Anspruch 5, **dadurch gekennzeichnet**, daß die Fasern eine nennenswerte Menge Sauerstoff und Kohlenstoff an der Oberfläche enthalten und die Zusammensetzung in Form eines Pulvers mindestens einen Bestandteil, ausgewählt aus MgO und $Nb_2O_5$, umfaßt, welcher dazu dient, ihre Anhaftung an die Fasern zu begrenzen.

7. Verfahren nach einem der vorhergehenden Ansprüche, **dadurch gekennzeichnet**, daß der Schritt e) durch Imprägnieren eines Gewebes aus langen Fasern mit einer Suspension der Zusammensetzung in Form eines Pulvers in einer viskosen Flüssigkeit durchgeführt wird, und daß der Schritt f) an einem Stapel von mehreren Lagen des so imprägnierten Gewebes durchgeführt wird.

8. Verfahren nach einem der vorhergehenden Ansprüche, **dadurch gekennzeichnet**, daß die glaskeramische Matrix im wesentlichen aus $SiO_2$, $Al_2O_3$, MgO und $Li_2O$ besteht.

9. Verfahren nach einem der vorhergehenden Ansprüche, **dadurch gekennzeichnet**, daß die Matrix im wesentlichen einer der folgenden Formeln entspricht:

0,05 BaO - 0,4 $Li_2O$ - $Al_2O_3$ - 3 $SiO_2$
0,5 MgO - 0,5 $Li_2O$ - $Al_2O_3$ - 4 $SiO_2$.